Europäisches Patentamt

(19) European Patent Office

Office européen des brevets

(11) Numéro de publication: **0 244 310**
**B1**

(12) **FASCICULE DE BREVET EUROPEEN**

(45) Date de publication du fascicule du brevet: **03.10.90**

(21) Numéro de dépôt: **87400944.2**

(22) Date de dépôt: **23.04.87**

(51) Int. Cl.⁵: **B 65 B 25/06,** A 23 B 4/10, A 23 B 4/00

(54) **Procédé d'emballage d'un produit alimentaire carné sec ou mi-sec et emballage pour la mise en oeuvre du procédé.**

(30) Priorité: **23.04.86 FR 8605869**

(43) Date de publication de la demande:
**04.11.87 Bulletin 87/45**

(45) Mention de la délivrance du brevet:
**03.10.90 Bulletin 90/40**

(84) Etats contractants désignés:
**AT BE CH DE ES FR GB GR IT LI LU NL SE**

(56) Documents cités:
**EP-A-0 167 477
DE-A-3 320 471
FR-A-2 407 872
FR-A-2 555 552**

(73) Titulaire: **SOPARIND
65, avenue de Ségur
F-75007 Paris (FR)**

(72) Inventeur: **Chauvin, Bernard Louis
Les Muscardières, Le Viel Baugé
F-49150 Bauge (FR)**
Inventeur: **Bureau, Pierre Marie Régis
4, avenue Charles De Gaulle
F-73000 Chambery (FR)**

(74) Mandataire: **Derambure, Christian
BUGNION ASSOCIES 55, rue Boissonade
F-75014 Paris (FR)**

Courier Press, Leamington Spa, England.

**EP 0 244 310 B1**

## Description

L'invention concerne un procédé d'emballage de produits alimentaires carnés secs ou mi-secs, plus spécialement des produits de charcuterie sèche ou mi-sèche, tels que des saucisses ou saucissons secs.

On connaît déjà plusieurs variantes de procédé d'emballage de produits alimentaires, en vue d'assurer leur conservation.

Dans une première variante (brevets français 2 287 382 et 2 464 201), le produit alimentaire est emballé sous vide avec un film imperméable aux gaz et à la vapeur d'eau.

Dans une deuxième variante (brevets français 2 290 153, 2 327 925, 2 351 008, 2 483 361), le produit alimentaire est emballé en étant placé dans un gaz de remplissage remplaçant l'air ambiant, au moyen d'un film imperméable aux gaz et à la vapeur d'eau.

Dans une troisième variante, le produit alimentaire est emballé en présence d'un corps apte à modifier l'atmosphère environnant le produit dans l'emballage: corps emmagasinant l'eau combiné à une enceinte perméable (brevet français 2 190 357); tamis moléculaire absorbant l'éthylène combiné à un film dont la perméabilité au gaz carbonique est comprise entre 5 000 et 100 000 ml/m². 24H. (brevet français 2 407 872); corps absorbant la vapeur d'eau et le gaz carbonique combiné à un film perméable aux gaz (brevets français 2 583 066 et 2 418 175); agent de conservation combiné à un film ayant une perméabilité limitée simultanément aux gaz et à la vapeur d'eau (brevet français 2 467 795) ou imperméable (brevet français 2 240 632).

Dans une quatrième variante, bien connue par l'usage, le produit alimentaire tel qu'un saucisson est emballé sous atmosphère ambiante dans un film imperméable.

Dans une cinquième variante, également bien connue par l'usage, le produit alimentaire, également tel qu'un saucisson est emballé sous atmosphère ambiante dans un film percé de macroperforations, c'est à dire des perforations ouvertes avec enlèvement de matière de l'ordre de 5 mm de diamètre.

On connaît aussi (brevet européen 0 167 477) un emballage pour des produits alimentaires, tels que des fruits, des légumes, des fromages, des produits de boucherie, qui est appliqué avec contact sur le produit alimentaire emballé, sans que ce dernier ne soit environné par l'atmosphère ambiante. Cet emballage est étanche à l'air et à la vapeur d'eau et comporte au moins une couche d'un polymère mixte appliquée directement sur le produit ou sur une couche de gélatine elle-même appliquée directement sur le produit. Cet emballage est non seulement étanche, mais aussi rigide. Selon ce document, le produit est donc traité pour prévenir sa contamination, la couche qui l'enduit agissant comme barrière aux micro-organismes.

On connaît aussi (brevet allemand 3 320 471) un dispositif pour le lavage continu et l'enrobage ultérieur de produits placés dans du boyau qui comporte successivement un poste de lavage, un poste d'enrobage par immersion et des postes de séchage essentiellement placés après le poste d'enrobage.

On connaît aussi (brevets américains 3 423 212 et 3 795 749) des films d'emballage pour des applications spécifiques, ayant des caractéristiques de perméabilité aux gaz et à la vapeur d'eau spécialement adaptées à ces applications. Les perméabilités à l'oxygène, au gaz carbonique, à la vapeur d'eau sont, pour les brevets américains 3 423 212 et 3 795 749 respectivement et successivement comprise entre 1 250 et 6 250 cm³/cm². 24H (200 et 1000 cm³/inch². 24H), comprise entre 3 750 et 5 000 cm³/cm². 24H (600 et 800 cm³/inch². 24H), supérieur à 40 g/m². 24H, d'une part, comprise entre 18 750 et 37 500 cm³/cm². 24H (2000 et 4000 cm³/inch². 24H), comprise entre 62 500 et 156 250 cm³/cm². 24H (10 000 et 25 000 cm³/inch². 24H), comprise entre 37,5 et 156,25 g/cm². 24H (6 et 25 g/inch². 24H). Dans un cas comme dans l'autre, les perméabilités à l'oxygène, au gaz carbonique et à la vapeur d'eau sont élevées ou très élevées, le premier document US 3 423 212 s'applique essentiellement à des produits particulièrement humides (tranche de boeuf, fruits, légumes), alors quel le second U.S. 3 795 749 s'applique limitativement à de la laitue. Ces produits sont différents de ceux auxquels on s'intéresse dans la présente invention, qui sont secs ou mi-secs, bien que "vivants", avec un comportement dans le temps différent de ceux des produits visés dans les applications selon ces deux documents.

Par ailleurs, on connaît des feuilles perforées destinées à l'emballage (brevet français 1 162 343 et 2 555 552), ou spécialement traitées en vue de certaines fonctions particulières: pouvoir antiglissant (brevet français 2 353 207), tenue à des radiations ionisantes (brevet américan 3 194 668). Toutefois, ces fonctions ne sont pas spécialement visées dans la présente invention.

Les variantes mettant en oeuvre le vide, soit en tant qu'étape terminale (première variante), soit en tant qu'étape intermédiaire (deuxième variante), ont comme inconvénients essentiels de nécessiter la mise en oeuvre d'installations coûteuses en investissement et en fonctionnement et de n'être pas adaptés à certains produits, tels que, par exemple, des saucisses ou saucissons secs pour lesquels une présentation classique notamment avec poudre de fleurage tel que du talc est souhaitable à la fois pour satisfaire le consommateur et pour les propriétés favorables procurées par le fleurage. Les différentse exemples proposés dans ces variantes correspondent à des applications très spécifiques: prévention des souillures par saignement (brevet français 2 287 382); emballage de viande présentant des saillies d'os (brevet français 2 464 201); conservation de viande découpée en portion pendant quelques jours sans altération de la couleur et des qualités bactériologiques et organoleptiques (brevet français 2 290 153); conservation à basse température (−2,2°C à +4,4°C) de la viande ou de la volaille pendant de longues périodes pouvant atteindre 40 jours, l'anhydride carbonique gazeux et l'absence d'oxygène empêchant la prolifération des bactéries (brevet français 2 327 925).

La troisième variante (corps modifiant l'atmosphère entourant le produit) a comme inconvénient d'augmenter le volume de l'emballage du fait de la présence du corps en question, d'être peu commode pour l'utilisateur, d'impliquer un emballage suffisamment rigide, de n'être pas permanent et constant car l'effet du corps modifiant l'atmosphère décroît avec le temps. De plus, les différents exemples proposés dans ces brevets correspondent également à des applications très spécifiques: affinage du fromage (brevet français 2 190 357); conservation des fleurs, fruits, légumes (brevet français 2 407 872); ralentissement de la maturation des fruits et légumes par abaissement du taux d'humidité de gaz carbonique dans l'atmosphère environnant.

L'emballage sous atmosphère ambiante et film imperméable lorsqu'il est appliqué à des produits tels que des saucisses ou saucissons secs, a comme avantages d'éviter la perte en poids du produit et de lui garder une certaine souplesse. Par contre, ce procédé a comme inconvénient le développement de micro-organismes anaerobie et d'odeurs de fermentation.

L'emballage sous atmosphère ambiante et film macroperforé (perforations avec enlèvement de matière de l'ordre de 5 mm de diamètre), lorsqu'il est appliqué à des produits tels que des saucisses ou saucissons secs, a comme inconvénient majeur la dessication excessive du produit, comme sile produit n'était pas emballé avec comme conséquence une perte en poids importante et une dureté excessive du produit alimentaire. L'emballage a donc pour seul fonction, dans ce cas, la protection du produit alimentaire emballé contre les souillures par le toucher.

En ce qui concerne l'emballage selon le brevet européen 0 167 477, il concerne surtout des produits alimentaires qui ont une surface extérieure plutôt aqueuse ce qui les rend vulnérables aux dégradations biologiques et aux fortes dessications. De plus, la gélatine présente l'inconvénient essentiel que "les germes banals de l'air ambiant y trouvent un milieu très favorable. Elle dégage alors de mauvaises odeurs et perd une partie importante de sa force en gelée. Elle devient inutilisable en raison de la pollution interne qu'elle apporterait aux fabrications" (la charcuterie crue, Editions Soussana—Edition 1978—page 54). Il est d'ailleurs à noter que ce document prévoit l'incorporation d'une matière odorante. De la même manière que pour l'emballage sous atmosphère ambiante et film imperméable mentionné précédemment, il y a risque de développement de micro-organismes anaérobies (et donc d'odeurs de fermentation), d'autant plus grand que la gélatine constitue un support de culture propice. Enfin, l'emballage proposé dans ce document n'est pas compatible avec une présentation classique du produit tel qu'une poudre de fleurage et la possibilité pour le consommateur de tâter le produit. En effet, celui-ci est enfermé dans une coque rigide. Enfin l'application de l'emballage sur le produit, en contact intime s'apparente à l'emballage sous vide avec les inconvénients qui en résultent.

L'invention vise donc à résoudre le problème de la conservation de produits alimentaires carnés secs ou mi-secs et notamment des produits de charcuterie sèche ou mi-sèche, tels que des saucisses ou saucissons sec dans des conditions économiques et commerciales satisfaisantes (notamment avec une présentation traditionnelle caractérisée par la présence d'une poudre de fleurage et la possibilité pour le consommateur de tâter le produit) et de manière que, simultanément, la perte en poids du produit soit limitée notamment pour des raisons économiques; qu'en conséquence le produit garde dans le temps une certaine souplesse, ainsi que le souhaite le consommateur, et enfin que le risque de fermentation ou de développements de micro-organismes anaerobie soit évité.

En effet, l'état de la technique ne permet pas d'atteindre ces objectifs simultanément, l'emploi du vide ou équivalent étant coûteux, l'emploi d'un emballage étanche provoquant la dégradation des micro-organismes aérobies de surface et/ou le développement de micro-organismes anaérobies l'emploi d'un emballage macroperforé provoquant une perte de poids importante et la dureté du produit du fait de son séchage, l'emploi de gélatine renforçant le risque de contamination, l'emploi d'un emballage appliqué sur le produit, sans atmosphère intermédiaire ne permettant pas la présentation souhaitée du produit, l'emploi d'un emballage ayant une forte perméabilité à la vapeur d'eau ne permettant pas de limiter la perte en poids du produit.

A cet effet, l'invention propose un procédé d'emballage d'un produit alimentaire carné, sec ou mi-sec, plus spécialement un produit de charcuterie sèche mi-sèche, tel qu'une saucisse ou saucisson sec, dans lequel on traite d'abord le produit pour prévenir sa contamination par les micro-organismes, caractérisé par le fait qu'on place ensuite le produit ainsi traité sous atmosphère ambiante dans un emballage présentant une perméabilité à la vapeur d'eau faible, mais non nulle, comprise entre 5 g/m$^2$ . 24H et 100 g/m$^2$ . 24H, lequel emballage est écarté ou ne présente que des points ou surfaces de contact limités avec le produit, et l'emballage est fermé dans son ensemble.

Dans une première variante pour prévenir la contamination du produit par les micro-organismes, on enduit le produit avec un matériau formant barrière aux micro-organismes. Dans une seconde variante, on traite le produit par ionisation.

Dans une forme de réalisation préférentielle de la première variante, appliquée à une saucisse ou saucisson sec à boyau naturel ou autre, on procède aux étapes successives de brossage-lavage, égouttage, enduction de colle alimentaire sans séchage préalable, enrobage dans une poudre de fleurage, séchage et polymérisation puis enfin emballage dans un film qui présente une perméabilité à la vapeur d'eau faible mais non nulle comprise entre 5 g/m$^2$ . 24H et 100 g/m$^2$ . 24H, notamment grâce à des micro-perforations,

EP 0 244 310 B1

et qui est substantiellement écarté de la saucisse ou saucisson sec.

Contrairement au document EP 0 167 447, l'invention s'applique spécifiquement à des produits secs ou mi-secs, notamment de charcuterie. Il est prévu une phase de traitement en vue d'éviter la contamination par les micro-organismes, non prévue dans ce document (l'enrobage par la gélatine ayant un effet opposé). L'emballage est écarté du produit emballé, ainsi sous atmosphère ambiante, alors que dans ce document l'emballage est appliqué sur le produit. Egalement, selon l'invention la perméabilité de l'emballage à la vapeur d'eau est faible, mais non nulle, à l'opposé de ce qui est prévu par ce document. Enfin, il est à noter que la mise en oeuvre de l'invention est simple et non complexe.

Les autres caractéristiques preférées de l'invention résulteront de la description qui suivra en référence aux dessins annexés dans lesquels:

La figure 1 est une vue schématique des différentes étapes d'une variante possible du procédé selon l'invention.

La figure 2 est une vue schématique en élévation du produit emballé conformément au procédé selon l'invention.

La figure 3 est une vue schématique en coupe partielle à plus grande échelle selon la ligne III—III de la figure 2.

La figure 4 est une vue partielle en élévation du film utilisé dans le procédé selon l'invention.

La figure 5 est une vue schématique en coupe transversale selon la ligne V—V de la figure 4, à plus grande échelle.

L'invention concerne un procédé d'emballage d'un produit alimentaire 1 carné, sec ou mi-sec, notamment un produit de charcuterie sèche ou mi-sèche et plus spécialement une saucisse ou saucisson sec, c'est-à-dire un produit alimentaire carné qui a été séché jusqu'à un certain degré mais qui, d'une part, présente encore une certaine humidité et donc une certaine souplesse, et, qui, d'autre part, a, de par sa nature même, une vie et une activité microbienne et donc une certaine évolution.

Le produit 1 est généralement solide, monobloc, massif, par exemple de forme générale pseudo cylindrique, sans que cela soit limitatif.

Un film 2 forme préférentiellement la totalité ou, en variante, seulement une partie de l'emballage du produit 1. Cet emballage est fermé dans son ensemble, notamment par soudage our agrafage. Il peut être, selon sa constitution, ou sa mise en oeuvre, rigide ou souple ou encore préférentiellement déformable avec une certaine tenue. Préférentiellement, l'emballage est transparent dans sa totalité de manière à permettre de visualiser le produit 1 intégralement.

Selon l'invention, on traite d'abord le produit 1 pour prévenir sa contamination par les micro-organismes et on place ensuite le produit 1 ainsi traité sous atmosphère ambiante dans un emballage 2 présentant une perméabilité à la vapeur d'eau qui est faible sans pour autant être nulle, pour l'emballage.

On entend par emballage sous atmosphère ambiante le fait que, d'une part, l'emballage est écarté du produit 1 et non appliqué sur lui et, d'autre part, c'est l'atmosphère ambiante qui entoure le produit 1 et non une atmosphère confinée, ou le vide, ou un gaz de remplacement.

L'emballage 2 sous atmosphère ambiante permet de s'affranchir d'une étape de vide.

Cette combinaison particulière de phases opératoires spécifiques a pour effet de simultanément limiter la perte en poids du produit 1, lui permettre de garder dans le temps une certaine souplesse, et prévenir le risque de fermentation ou de développement de micro-organismes anaérobies, ou autres micro-organismes indésirables.

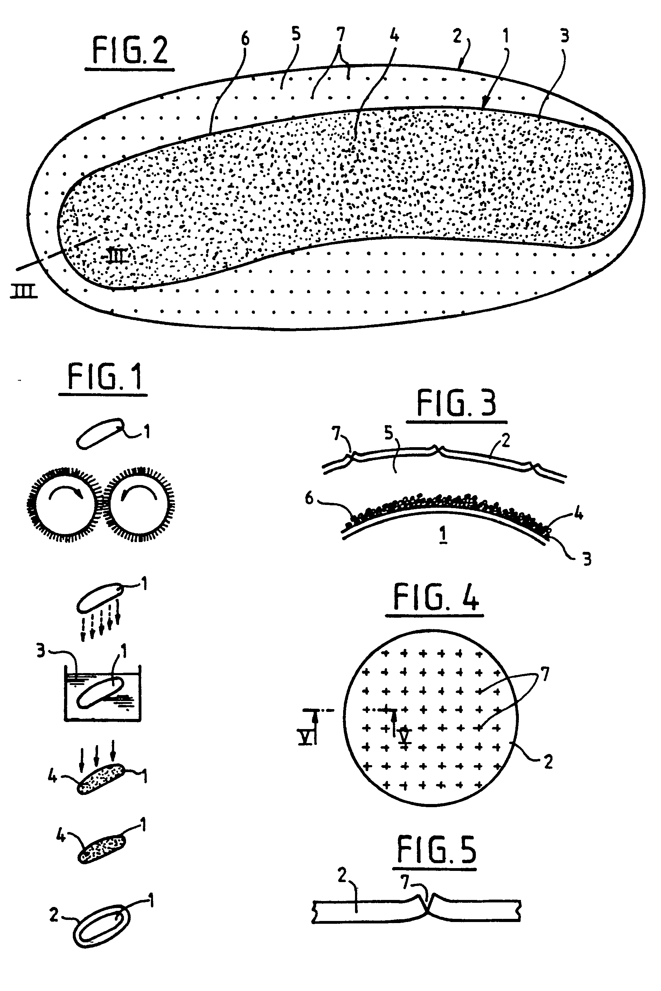

Selon une première variante de réalisation du procédé (figure 1) on enduit le proudit 1 avec un matériau 3 formant barrière aux micro-organismes. Ce matériau 3 est notamment une matière plastique alimentaire se polymérisant à l'air telle qu'une colle alimentaire, telle que celle utilisée avec certains produits carnés pour sa fonction collage. De bons résultats ont été obtenus avec de la colle connue sous la marque ENROBEX de la firme SOUSANA. Une telle colle peut être à base d'acétate de polyvinyle ou de chlorure de polyvinyle et comporter un plastifiant.

Avant enduction avec le matériau 3, on procède successivement à un brossage/lavage, puis à un égouttage. Le brossage a pour fonction d'éliminer les micro-organismes indésirables.

Après enduction avec le matériau 3, on enrobe le produit 1 dans un matériau 4 absorbant l'humidité, notamment une poudre de fleurage telle que du talc. Cet enrobage est essentiellement fonctionnel, mais permet également de conférer au produit 1 une présentation traditionnelle telle que souhaitée par le consommateur. Il doit être souligné ici que l'enrobage avec le matériau 4 absorbant l'humidité est liée au fait que le produit 1 est un produit sec ou mi-sec, en tout état de cause, n'est pas un produit fortement humide.

Selon l'invention, avant enduction avec le matériau 3, il n'est pas prévu une étape spéciale de séchage mais seulement une étape d'égouttage. En effet, une étape de séchage préalable n'est pas souhaitable.

Selon une seconde variante de réalisation du procédé, non représentée, on traite le produit 1 par ionisation. Le flux de particules peut être de l'ordre de 6,4 Mev et la dose appliquée de l'ordre de 5 kg Gray. Il est ici souligné que le produit 1 est traité avant emballage, ce qui permet de se dispenser d'avoir un emballage résistant à une telle ionisation.

D'autres variantes possibles de traitement préalable équivalentes peuvent être envisagées en combinaison avec l'emballage final, tel que décrit.

On utilise un emballage 2 sous forme de film en matière plastique dont la perméabilité à la vapeur

4

d'eau est faible mais non nulle, cette caractéristique du film 2 étant essentielle. Plus précisément, la perméabilité du film 2 à la vapeur d'eau est supérieure à 5 g/m² . 24 H et inférieure à 100 g/m² . 24H et de préférence et généralement inférieure à 40 g/m² . 24H (à température ambiante).

Préférentiellement, on utilise un emballage 2, c'est-à-dire un film, dont la perméabilité à l'oxygène ou au gaz carbonique est élevée, notamment supérieure à 5 000 cm³/m² . 24H (à température ambiante), ce qui contribue à éviter que l'atmosphère entourant le produit 1 voit sa composition en gaz carbonique augmenter et sa composition en oxygène diminuer, ce qui serait source de fermentation ou de développement de micro-organismes indésirables, notamment anaérobies.

En variante, on utilise un emballage 2 dont la perméabilité à l'oxygène et au gaz carbonique est inférieure à 5000 cm³/m² . 24H.

On place le produit 1 dans l'emballage 2, de manière que ce dernier soit écarté du produit 1 ou ne présente que des points ou lignes ou surfaces de contact limités avec lui, en vue de créer, autour du produit, une atmosphère gazeuse 5 continue (figure 2), notamment l'atmosphère ambiante. Par exemple, l'emballage 2 est en contact avec moins de 10% de la surface extérieure du produit 1. Le volume de l'atmosphère 5 est important, adapté à la nature du produit 1 et à la superficie de sa surface extérieure 6. Par exemple, dans le cas d'une saucisse ou saucisson sec en forme de U, ayant une longueur totale de l'ordre de 43 cm et un diamètre de l'ordre de 3,5 cm dont la superficie de la surface 6 est de l'ordre de 470 cm², le volume de l'atmosphère 5 est de l'ordre de 350 à 400 cm³, l'emballage 2 ayant une longueur de l'ordre de 30 cm, une largeur de l'ordre de 12 cm et une hauteur de l'ordre de 3,5 cm. Le contact limité produit l'emballage 2 peut être réalisé de différentes manières, notamment grâce à une certaine tenue et à une forme appropriée données à l'emballage 2 respectivement à une forme donnée au produit 1.

Une forme de réalisation possible d'un tel emballage 2 en combinaison est constitué par un film normalement (originellement) étanche ou presque étanche aux gaz (oxygène et gaz carbonique) et à la vapeur d'eau qui comporte ensuite des microperforations 7, sans enlèvement de matière, proches les unes des autres et réparties en regard de la surface extérieure 6 du produit 1.

Les microperforations 7 sont plus spécialement représentées sur les figures 4 et 5. Elles sont consitutées par des déchirures du film d'emballage 2 dans son épaisseur, ces déchirures se refermant naturellement par suite de l'élasticité du film d'emballage 2. Les microperforations 7 constituent donc des sortes de valves autorisant des échanges gazeux en fonction de la pression différentielle des gaz entre l'intérieur et l'extérieur de l'emballage 2.

Ainsi l'emballage 2 avec les microperforations 7 est perméable, notamment fortement perméable aux gaz et perméable mais faiblement à la vapeur d'eau.

Les microperforations 7 sont par exemple réparties en lignes et en colonnes écartées les unes des autres d'une distance comprise entre 5 mm et 15 mm, préférentiellement égale ou voisine de 7 mm.

Préférentiellement, on réalise un grand nombre de petites microperforations 7 régulièrement réparties sur toute la surface 6. Dans le cas ou on souhaite que le produit 1 évolue dans le sens d'un plus grand séchage, on peut augmenter la taille des microperforations 7 ou leur densité. Dans le cas, ou, au contraire, on cherche à éviter le séchage du produit 1, on limite la taille des microperforations 7 et leur densité.

L'invention concerne également tout autre traitement physique du film de l'emballage 2 lui conférant des propriétés de perméabilité convenables.

Ainsi, dans la forme de réalisation préférentielle du procédé selon l'invention appliquée à une saucisse ou saucisson sec à boyau naturel ou non 1, il existe les étapes successives de brossage-lavage, égouttage, enduction de colle alimentaire sans séchage préalable, fleurage externe, séchage et polymérisation de al colle puis enfin emballage dans un film perméable, notamment fortement perméable aux gaz (oxygène et gaz carbonique) et présentant une perméabilité à la vapeur d'eau faible mais non nulle comprise entre 5 g/m² . 24H et 100 g/m² . 24H grâce à des microperforations 7, et substantiellement écarté de la saucisse ou saucisson sec 1.

Des essais de mise en oeuvre du procédé selon l'invention ont été conduit et ont donné les résultats suivants:

Huit séries d'échantillons de saucisses sèches de poids compris entre 300 grammes et 450 grammes et de longueur comprise entre 15 cm et 30 cm ont été stockées pendant huit jours en atmosphère sèche avec succession de chocs thermiques. Les échantillons no. 1, 2, 3 et 8 ne comportent aucune barrière aux micro-organismes notamment aucune enduction dans une colle alimentaire. Au contraire, les échantillons no. 4, 5, 6 et 7 comportent une telle barrière aux micro-organismes par enduction de colle alimentaire puis talquage sans séchage préalable.

Les échantillons no. 7 et 8 comportent un film microperforé perméable aux gaz et perméable faiblement à la vapeur d'eau, conformément à l'invention. Les mesures portant sur la perte en poids, la présentation et l'état de souplesse du produit 1 à l'issue de la période de stockage sont résumées dans le tableau ci-dessous.

| Produit 1 et emballage 2 | | | Etat du produit 1 | | |
|---|---|---|---|---|---|
| Série échantillon | Barrière micro-organisme | Emballage | Perte en poids en % | Présentation | Etat de sou-plesse |
| 1 | NON | NON | 8.2 | Bonne | Dur |
| 2 | NON | Film macro-perforé | 4.52 | Bonne | Dur |
| 3 | NON | Film étanche | Négligeable | Développement micro-organismes. Fermentation anaérobie | Souple |
| 4 | OUI | NON | 7.67 | Bonne | Dur |
| 5 | OUI | Film macro-perforé | 3.52 | Bonne | Dur |
| 6 | OUI | Film étanche | Négligeable | Légère fermentation anaéro-bie | Souple |
| 7 | OUI | Film micro-perforé | Négligeable inférieur à 0,05 | Excellente | Souple |
| 8 | NON | Film micro-perforé | Négligeable | Foisonnement de la fleur externe | Souple |

Comme on peut le constater, la série d'échantillons no. 7 qui prévoit la combinaison d'une barrière aux micro-organismes par enduction avec le matériau barrière 3 et un emballage 2 sous forme de film microperforé donne les meilleurs résultats puisque simultanément la perte en poids du produit est négligeable—inférieure à 0,05%, que la présentation du produit est excellente, c'est à dire exempte de développement de micro-organismes ou de fermentation anaérobie et que le produit reste souple.

Il doit être souligné ici d'abord que l'invention concerne spécifiquement les produits 1 secs ou mi-secs, notamment de charcuterie. Ensuite, que ces deux objectifs principaux visés sont, en combinaison, une limitation de laperte en poids des produits 1 et leur présentation convenable pour les utilisateurs. Enfin, du point de vue du procédé même, la combinaison du traitement préalable du produit 1 contre sa contamination avec son emballage ultérieur dans un emballage 2 qui lui-même a une perméabilité faible mais non nulle à la vapeur d'eau combinée préférentiellement à une perméabilité élevée aux gaz (oxygène et gaz carbonique), l'emballage étant réalisé sous atmosphère ambiante.

**Revendications**

1. Procédé d'emballage d'un produit alimentaire (1) carné, sec ou mi-sec, plus spécialement un produit de charcuterie sèche ou mi-sèche, tel qu'une saucisse ou saucisson sec, dans lequel on traite d'abord le produit (1) pour prévenir sa contamination par les micro-organismes, caractérisé par le fait qu'on place ensuite le produit (1) ainsi traité sous atmosphère ambiante dans un emballage (2) présentant une perméabilité à la vapeur d'eau faible, mais non nulle, comprise entre 5 g/m². 24H et 100 g/m². 24H, lequel emballage (2) est écarté ou ne présente que des points ou surfaces de contact limités avec le produit (1), et l'emballage (2) est fermé dans son ensemble.

2. Procédé selon la revendication 1, caractérisé par le fait que pour prévenir la contamination du produit (1) par micro-organismes, on enduit le produit (1) avec un matériau (3) formant barrière aux micro-organismes.

3. Procédé selon l'une quelconque des revendications 1 et 2, caractérisé par le fait qu'on enduit le produit (1) dans un matériau (3) constitué par une matière plastique alimentaire se polymérisant à l'air telle qu'une colle alimentaire.

4. Procédé selon l'une quelconque des revendications 1 à 3, caractérisé par le fait qu'avant enduction avec le matériau (3) formant barrière, on procède successivement à un brossage-lavage puis à un égouttage du produit (1).

5. Procédé selon l'une quelconque des revendications 1 à 4, caractérisé par le fait qu'après enduction avec le matériau (3) formant barrière, on enrobe le produit (1) dans un matériau (4) absorbant l'humidité notamment une poudre de fleurage telle que du talc.

6. Procédé selon l'une quelconque des revendications 1 à 5, caractérisé par le fait qu'avant enduction avec le matériau (3), il ne comporte pas une étape de séchage.

7. Procédé selon la revendication 1, caractérisé par le fait que pour prévenir la contamination du produit (1) par les micro-organismes, on traite le produit par ionisation, notamment sous un flux de particules de l'ordre de 6,4 Mev, la dose appliquée étant de l'ordre de 5 kg Gray.

8. Procédé selon l'une quelconque des revendications 1 à 7, caractérisé par le fait qu'on utilise un emballage (2) dont la perméabilité à la vapeur d'eau est inférieure à 40 g/m$^2$ . 24H.

9. Procédé selon l'une quelconque des revendications 1 à 8, caractérisé par le fait qu'on utilise un emballage (2) dont la perméabilité à l'oxygène ou au gaz carbonique est élevé notamment supérieure à 5 000 cm$^3$/m$^2$ . 24H.

10. Procédé selon l'une quelconque des revendications 1 à 8, caractérisé par le fait qu'on utilise un emballage dont la perméabilité à l'oxygène ou au gaz carbonique est faible, notamment inférieure à 5 000 cm$^3$/m$^2$ . 24H.

11. Procédé selon l'une quelconque des revendications 1 à 10, caractérisé par le fait qu'on utilise comme emballage (2) un film normalement étanche ou presque étanche aux gaz et à la vapeur d'eau qui comporte ensuite des microperforations (7), sans enlèvement de matière, proches les unes des autres et réparties en regard de la surface extérieure (6) du produit (1).

12. Procédé selon la revendication 11, caractérisé par le fait que les microperforations (7) sont des déchirures dans l'épaisseur du film d'emballage (2) qui se referment naturellement.

13. Procédé selon l'une quelconque des revendications 11 et 12, caractérisé par le fait quel es microperforations (7), sont écartées les unes des autres d'une distance comprise entre 5 mm et 15 mm préférentiellement égale ou voisine de 7 mm.

14. Procédé selon l'une quelconque des revendications 1 à 13, caractérisé par le fait qu'il est appliqué à une saucisse ou saucisson sec à boyau naturel ou non et comporte les étapes successives de brossage-lavage, égouttage, enduction, talquage, séchage et polymérisation puis enfin emballage dans un flm perméable notamment fortement perméable aux gaz et présentant une perméabilité à la vapeur d'eau faible, mais non nulle comprise entre 5 g/m$^2$ . 24H et 100 g/m$^2$ . 24H grâce à des micro-perforations, substantiellement écarté de la saucisse ou saucisson sec (1).

**Patentansprüche**

1. Verfahren zum Verpacken von trockenen oder halbtrockenen Fleischnahrungsmitteln, insbesondere von trockenen oder halbtrockenen Metzgereiprodukten, wie Würtschen oder Dauerwurst, bei dem das Produkt (1) zum Verhindern seiner Kontamination zunächst durch Mikroorganismen behandelt wird, dadurch gekennzeichnet, daß das so behandelte Produkt (1) danach unter Umgebungsluft in eine Verpackung (2) gebracht wird, die eine schwache aber vorhandene Wasserdampfdurchlässigkeit zwischen 5 g/m$^2$ . 24H und 100 g/m$^2$ . 24H besitzt und die vom Produkt (1) einen Abstand hat oder nur Punkte oder begrenzte Knotaktflächen mit dem Produkt (1) gemeinsam hat, und daß die Verpackung (2) in ihrer Gesamtheit verschlossen weil.

2. Verfahren nach Anspruch 1, dadurch gekennzeichnet, daß zum Verhüten der Kontamination des Produktes (1) durch Mikroorganismen das Produkt (1) mit einem Mittel (3), das eine Barriere für Mikroorganismen bildet, überzogen wird.

3. Verfahren nach Anspruch 1 oder 2, dadurch gekennzeichnet, daß das Produkt (1) mit einem Mittel (3) überzogen wird, das durch einen Nahrungsmittelkunststoff gebildet ist, der sich in Luft wie ein Nahrungsmittelkleber polymerisiert.

4. Verfahren nach einem der Ansprüche 1 bis 3, dadurch gekennzeichnet, daß vor dem Überziehen mit dem eine Barrier bildenden Mittel (3) das Produkt (1) nacheinander einem Bürst-Waschvorgang und danach einem Abtropfvorgang unterzogen wird.

5. Verfahren nach einem der Ansprüche 1 bis 4, dadurch gekennzeichnet, daß nach dem Überziehen mit dem eine Barriere bildenden Mittel (3) das Produkt (1) mit einem Feuchtigkeit absorbierenden Mittel (4), insbesondere einem Kleiepulver, wie Talg überzogen wird.

6. Verfahren nach einem der Ansprüche 1 bis 5, dadurch gekennzeichnet, daß vor dem Überziehen mit dem Mittel (3) kein Trocknungsschritt durchgeführt wird.

7. Verfahren nach Anspruch 1, dadurch gekennzeichnet, daß zum Verhüten der Kontamination des Produktes (1) durch Mikroorganismen das Produkt durch Ionisation, insbesondere unter einem Teilchenfluß in der Größenordnung von 6,4 Mev, wobei die angewendete Dosis in der Größenordnung von 5 kg Gray ist, behandelt wird.

8. Verfahren nach einem der Ansprüche 1 bis 7, dadurch gekennzeichnet, daß eine Verpackung (2), deren Wasserdampfdurchlässigkeit unter 40 g/m² . 24H ist, verwendet wird.

9. Verfahren nach einem der Ansprüche 1 bis 8, dadurch gekennzeichnet, daß eine Verpackung (2), deren Sauerstoff- oder Kohlendioxiddurchlässigkeit erhöht, insbesondere oberhalb 5000 cm³/m² . 24H ist, verwendet wird.

10. Verfahren nach einem der Ansprüche 1 bis 8, dadurch gekennzeichnet, daß eine Verpackung, deren Sauerstoff- oder Kohlendioxiddurchlässigkeit gering, insbesondere unter 5000 cm³/m² . 24H ist, verwendet wird.

11. Verfahren nach einem der Ansprüche 1 bis 10, dadurch gekennzeichnet, daß als Verpackung (2) ein normalerweise gas- und wasserdampfdichte oder beinahe gas- und wasserdampfdichte Folie verwendet wird, die Mikroperforationen (7) aufweist, die ohne Materialabfall gebildet, die nahe beieinander und die bezüglich der Außenfläche (6) des Produktes (1) verteilt sind, verwendet wird.

12. Verfahren nach Anspruch 11, dadurch gekennzeichnet, daß die Mirkoperforationen (7) Risse in der Dicke der Folie der Verpackung (2) sind, die sich auf natürliche Weise wieder schließen.

13. Verfahren nach Anspruch 11 oder 12, dadurch gekennzeichnet, daß die Mikroperforationen (7) in einem Abstand zueinander zwischen 5 mm und 15 mm, vorzugsweise gleich oder im Bereich von 7 mm angeordnet werden.

14. Verfahren nach einem der Ansprüche 1 bis 13, dadurch gekennzeichnet, daß es bei einem Würstchen oder einer Dauerwurst mit natürlichem oder künstlichem Darm angewendet wird und die aufeinanderfolgenden Schritte Bürsten/Waschen, Abtropfen, Bestreichen, Einpudern, Trocknen und Polymerisation und danach Verpacken in eine durchlässige Folie beinhaltet, die insbesondere stark gasdurchlässig ist und eine schwache Wasserdampfdurchlässigkeit besitzt, die nicht Null sondern zwischen 5 g/m² . 24H und 100 g/m² . 24H aufgrund der Mikroperforationen ist und von dem Würstchen oder der Dauerwurst (1) einen Abstand besitzt.

**Claims**

1. Method of packaging a dry or semi-dry meat food product (1), more specifically a dry or semi-dry pork product, such as a dry salami or sausage, in which the product (1) is initially treated to prevent contamination thereof by microorganisms, characterized in that the product (1) thus treated is then placed under ambient atmospheric conditions in a packaging (2) possessing a low but non-zero permeability to water vapour, of between 5 g/m² . 24H and 100 g/m² . 24H, which packaging (2) is at a distance from, or possesses only limited points or surfaces of contact with, the product (1), and the packaging (2) is closed in its entirety.

2. Method according to Claim 1, characterized in that, in order to prevent the contamination of the product (1) by microorganisms, the product (1) is coated with a material (3) forming a barrier against microorganisms.

3. Method according to either of Claims 1 and 2, characterized in that the product (1) is coated in a material (3) formed by an edible plastic material which polymerizes in air, such as an edible adhesive.

4. Method according to any one of Claims 1 to 3, characterized in that, before coating with the barrier-forming material (3), the product (1) is first brushed and washed, then strained.

5. Method according to any one of Claims 1 to 4, characterized in that, after coating with the barrier-forming material (3), the product (1) is coated with a moisture-absorbing material (4), in particular a dusting powder such as talc.

6. Method according to any one of Claims 1 to 5, characterized in that no drying stage takes place before coating with the material (3).

7. Method according to Claim 1, characterized in that, in order to prevent contamination of the product (1) by microorganisms, the product is treated by ionization, in particular under a particle flux of the order of 6.4 Mev, the dose applied being of the order of 5 kg Gray.

8. Method according to any one of Claims 1 to 7, characterized in that use is made of a packaging (2) whose permeability to water vapour is less than 40 g/m² . 24H.

9. Method according to any one of Claims 1 to 8, characterized in that use is made of a packaging (2) whose permeability to oxygen or to carbon dioxide is high and in particular greater than 5,000 cm³/m² . 24H.

10. Method according to any one of Claims 1 to 8, characterized in that use is made of a packaging whose permeability to oxygen or to carbon dioxide is low, and in particular less than 5,000 cm³/m² . 24H.

11. Method according to any one of Claims 1 to 10, characterized in that, as a packaging (2), use is made of a film which is normally tight or almost tight to gases and to water vapour and which then comprises microperforations (7), with no removal of material, which are close to each other and are distributed facing the outer surface (6) of the product (1).

12. Method according to Claim 11, characterized in that the microperforations (7) are rents in the thickness of the packaging film (2) which close naturally.

13. Method according to either of Claims 11 and 12, characterized in that the microperforations (7) are set apart from one another by a distance of between 5 mm and 15 mm, preferably equal to or in the vicinity of 7 mm.

14. Method according to any one of Claims 1 to 13, characterized in that it is applied to a dry salami or sausage having a natural or non-natural skin and comprises the successive stages of brushing/washing, straining, coating, talc-powdering, drying and polymerization, then finally packaging in a film which is permeable, in particular highly permeable, to gases and possesses a low but non-zero permeability to water vapour, of between 5 $g/m^2 . 24H$ and 100 $g/m^2 . 24H$, by virtue of microperforations, and is substantially separate from the dry salami or sausage (1).

FIG.2

FIG.1

FIG.3

FIG.4

FIG.5